# EUROPEAN PATENT SPECIFICATION

(11) **EP 1 361 104 B1**
(45) Date of publication and mention of the grant of the patent: **14.03.2007**
(21) Application number: 03396039.4
(22) Date of filing: 05.05.2003
(51) Int. Cl.: B60N 2/16, B62D 1/18

(54) **Mechanism for height adjustable seat and steering wheel, in particular for armoured vehicle**
Mechanismus für höhenverstellbaren Sitz und Lenkrad, insbesondere für gepanzertes Fahrzeug
Mécanisme ajustable en hauteur pour siège et volant, particulièrement pour véhicule blindé

(30) Priority: 07.05.2002 FI 20020861
(43) Date of publication of application: 12.11.2003
(73) Proprietor: Patria Vehicles Oy, 13100 Hämeenlinna (FI)
(72) Inventor: Taalikka, Reijo, 01280 Vantaa (FI)
(74) Representative: Tanskanen, Jarmo Tapio

(56) References cited:
- EP-A- 0 960 764
- DE-A- 1 630 402
- DE-A- 1 703 221
- DE-A- 2 307 183
- DE-A- 4 413 630
- US-A- 3 774 711

## Description

The present invention relates to a vehicle as defined in the preamble of claim 1.

In prior art, specifications DE-A-1 630 402 and DE-A-2307183 disclose an armored vehicle comprising a body within which a driver's seat is provided in a control cabin. The control cabin is delimited in an upward and/or forward direction by a wall. The top of the vehicle is provided with an opening, which is aligned with the driver's seat. The vehicle has an openable and closeable hatch arranged to cover the opening. The opening usually functions as a manhole through which the driver can get into and out of the control cabin. The opening is provided with viewing means allowing the driver to see outside to permit the vehicle to be steered. The viewing means may comprise a porthole in the front edge of the hatch and/or a periscope arranged in it.

The seat is supported on a seat frame, which is pivotally mounted at one end on a wall so that it can turn about a horizontal pivot shaft transverse relative to the vehicle between a low position and a high position. In the high position of the seat frame, the seat is closer to the opening than in the low position. The seat frame can be turned by means of an actuator about said pivot shaft to adjust the height position of the seat. The driver can adjust the seat height so that the position of the driver's eyes relative to the opening and/or to the viewing means provided in the hatch will be suitable. Usually the vehicle is driven with the seat in one of two different positions of adjustment such that, either the level of the driver's eyes is above the edge of the opening, or alternatively the level of the driver's eyes is below the edge of the opening, in which case a periscope is used for the viewing.

The fact that the seat frame is mounted on a wall instead of the floor is an advantageous solution as it improves the driver's safety in situations where the vehicle body undergoes accelerations, for example when the vehicle is moving on uneven terrain, bumps into an obstacle or drives onto a mine or when the vehicle is hit by a missile. As the seat frame is not in fixed contact with the floor, accelerations will not be transmitted from the floor structures directly to the driver. For steering of the vehicle, a steering wheel is provided in front of and near the seat, the steering wheel being connected to a console which is fastened to said seat frame.

However, the prior-art solutions have the drawback that, the steering wheel being supported on a turnable seat frame, when the height position is adjusted, the steering wheel is turned along with the seat frame through an equal amount, with the result that the driving ergonomics is necessarily impaired when the seat frame is turned to bring the seat from the low position to the high position.

The object of the invention is to overcome the drawbacks of prior art.

A specific object of the invention is to disclose a vehicle in which the position of the seat and that of the steering wheel are adjusted simultaneously so as to allow the steering ergonomics, i.e. the distances of the seat and steering wheel, to be maintained within a predetermined scope in different positions of adjustment.

The vehicle of the invention is characterized by what is disclosed in claim 1.

The vehicle of the invention comprises a body; a cabin space contained within the body and delimited by a wall in a direction upward and/or forward; a driver's seat placed in the cabin space; an opening provided in a wall above the seat and aligned with the seat; an openable and closeable hatch for the opening, said hatch being provided with viewing means allowing the driver to see outside; a steering wheel placed forward of the seat; a seat frame pivotally mounted on a wall by a first joint so as to be turnable about a horizontal first pivot shaft transverse relative to the vehicle between a low position and a high position, the seat being mounted on the other end of said seat frame, so that in the high position the seat is closer to the opening than in the low position; and an actuator for turning the seat frame about the first pivot shaft to adjust the height position of the seat.

According to the invention, the vehicle comprises a steering wheel frame, which is supported at one end on the wall by a second joint at a distance from the first joint so that it can turn about a second pivot shaft parallel to the first pivot shaft. The steering wheel is mounted at the other end of the steering wheel frame. In addition, the vehicle comprises a connecting bar fitted between the seat frame and the steering wheel frame to cause the steering wheel frame to move simultaneously with the seat frame to adjust the position of the steering wheel.

The arrangement of the invention provides the advantage that the mutual positions of the seat and the steering wheel can be caused to be adjusted in a way that allows the steering ergonomics, i.e. the distances between the seat and the steering wheel, to be maintained within a predetermined scope in different positions of adjustment. The driver does not have to perform any specific actions to adjust the steering wheel when changing the driving position between the low position and the high position, because the steering wheel frame is adjusted by means of the connecting bar simultaneously with the seat frame in a suitable relationship.

In an embodiment of the vehicle, one end of the connecting bar is pivotally connected to the seat frame by a third joint placed at a distance from the first joint while its second end is pivotally connected to the steering wheel frame by a fourth joint placed at a distance from the second joint so that the first joint, second joint, third joint and fourth joint form the pivots of a four-bar linkage mechanism.

In an embodiment of the vehicle, the leverages of the four-bar linkage mechanism formed by the joints are so fitted that the distance of the steering wheel relative to the seat remains favorable in respect of driving ergonomics when the seat frame is moved between the low position and the high position.

In an embodiment of the vehicle, the vehicle comprises foot pedals and a pedal support on which the pedals are mounted, said pedal support being connected to the seat frame so as to be turnable together with the seat frame. Thus, the distance of the pedals relative to the seat, and therefore the driver's operating distance from the pedals, can be kept unchanged while the seat is being raised and lowered.

In an embodiment of the vehicle, the vehicle comprises a footrest to allow the driver to rest his left foot on it, the footrest being mounted on the seat frame so as to be turnable together with the seat frame.

In an embodiment of the vehicle, the steering wheel is tiltably mounted in the steering wheel frame so as to allow adjustment of the tilt of the steering wheel. Further, the steering wheel may be so mounted in the steering wheel frame that the position of the steering wheel can be adjusted in the direction of its axis of rotation. The seat frame may further comprise a guide bar arrangement longitudinal relative to the vehicle to allow the position of the seat relative to the steering wheel to be adjusted along said guide bars. These adjustments allow the positions of the steering wheel and seat to be adjusted to suit drivers of different sizes.

In an embodiment of the vehicle, the seat frame comprises an entry step surface placed on the seat frame between the steering wheel and the seat to facilitate passage through the opening into the cabin space.

In an embodiment of the vehicle, the actuator is an extendable/retractable-type power means, which is arranged below the seat frame to exert a force between the vehicle body and the seat frame.

In an embodiment of the vehicle, the vehicle is an armored vehicle.

In the following, the invention will be described in detail by the aid of embodiment examples with reference to the attached drawing, wherein
Fig. 1 presents an embodiment of the vehicle of the invention in an oblique frontal/side view,
Fig. 2 presents a diagrammatic longitudinal section of the front part of the vehicle, showing the cabin space with the seat in a low position,
Fig. 3 presents the cabin space of Fig. 2 with the seat raised to a high position, and
Fig. 4 presents the cabin space of Fig. 2 with the seat raised to the high position and removed to a rear position to permit passage through the opening.

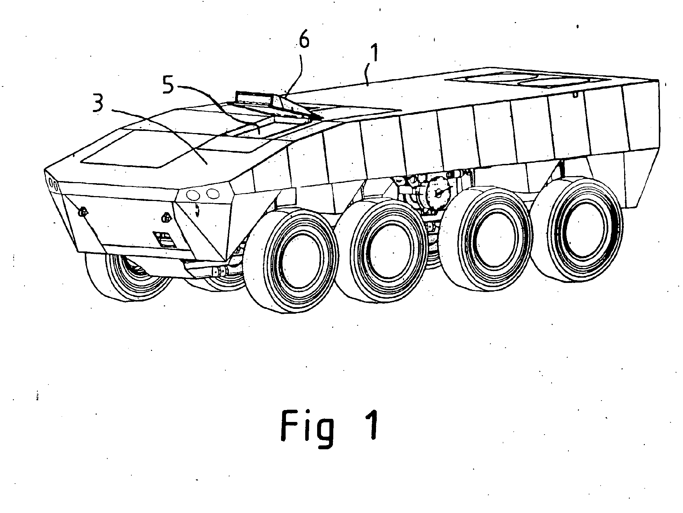

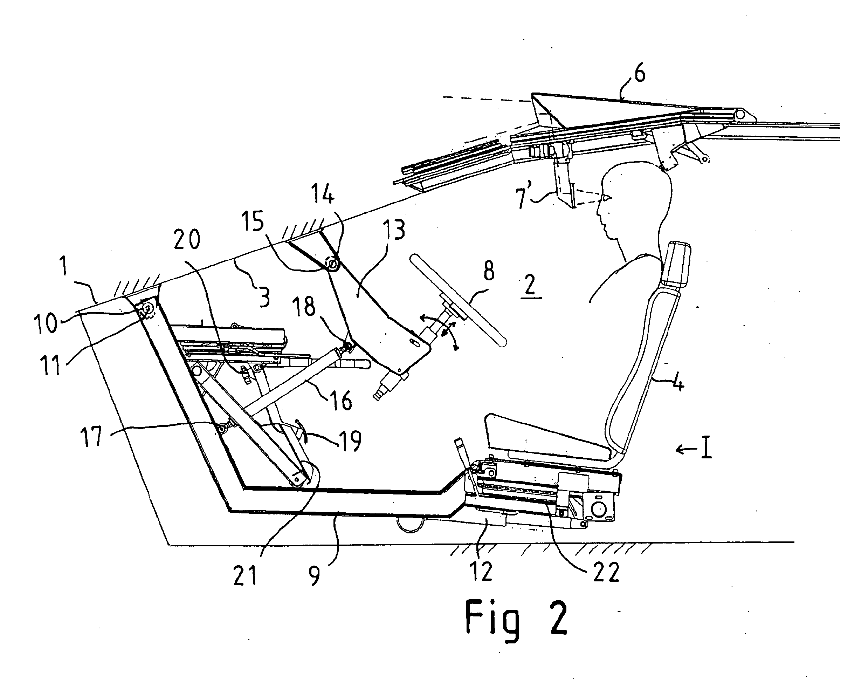

Fig. 1 shows an armored military vehicle comprising a body 1 with a cabin space 2 within its front part (see figures 2 - 4). Provided in the cabin space 2 is a driver's seat 4. As can be seen from Fig. 1, the vehicle has an opening 5 in its top 3. The opening 5 is aligned with the driver's seat. The vehicle has an openable and closeable hatch 6 arranged to cover the opening, Fig. 1 showing the hatch in a partially opened position. The opening 5 serves as a manhole, through which the driver can get into and out of the cabin space 2.

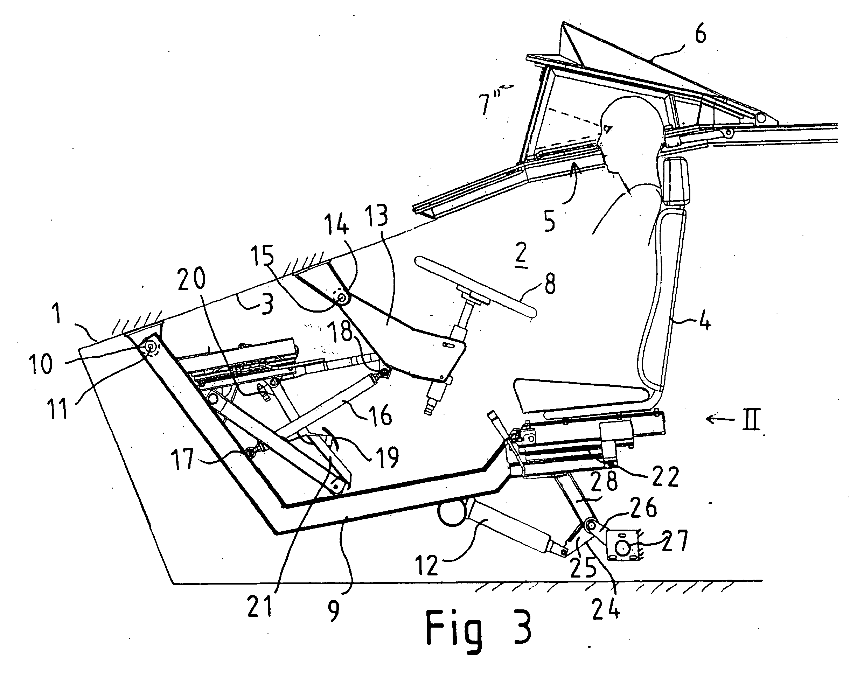

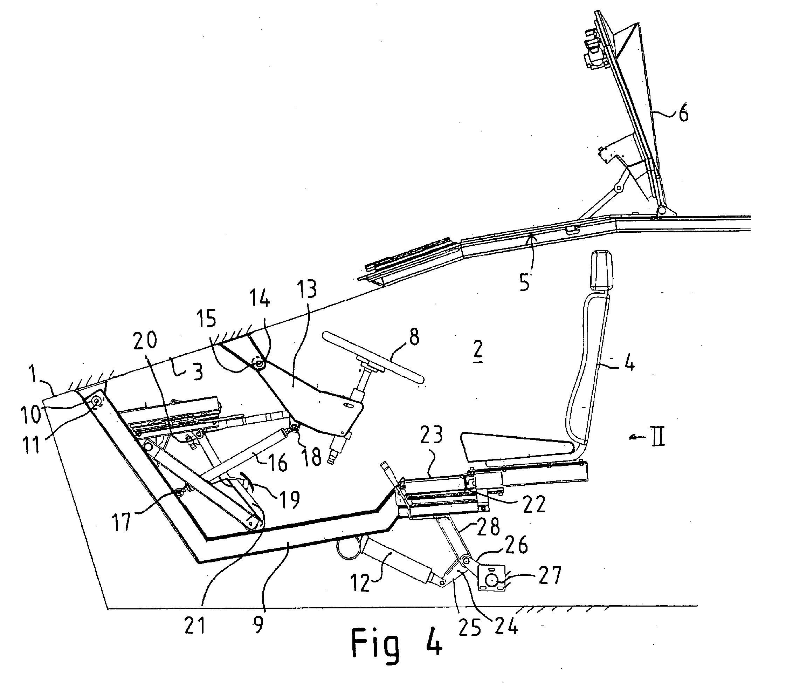

Fig. 2 shows the cabin space 2 in side view. The driver's seat 4 is connected to the seat frame 9, which is pivotally connected at its forward end to the top wall 3 by a first joint 10 so that the seat frame can turn or "swing" relative to the longitudinal direction of the vehicle about a transverse horizontal first pivot shaft 11 between two extreme positions, a low position I (Fig. 2) and a high position II (Fig. 3 and 4). The seat 4 is mounted at the rear end of the seat frame 9. In Fig. 2, the seat frame 9 is in the low position I and the hatch 6 is in a closed position. The hatch 6 is kept in the closed position when the vehicle is used in combat or training conditions. The height position of the seat is so adjusted that the driver's eyes are at a suitable height relative to the ocular of a periscope 7' and the driver has a good view through the periscope 7' over the terrain in front of the vehicle, as visualized in Fig. 2. To allow the seat 4 to be raised and lowered, an extendable/retractable-type power means 12, such as a hydraulic or pneumatic cylinder, screw motor, spindle motor or the like, designed to exert a force between the vehicle body 1 and the seat frame 9, is arranged below the seat frame 9. By extending or retracting the power means, the seat frame 9 is turned about the first pivot shaft 11.

The steering wheel 8 is connected to the rear end of the steering wheel frame 13. The steering wheel frame 13 is supported on the wall 3 at its front end by a second joint 14, which is located at a distance from the first joint 10 so that the steering wheel frame 13 can turn or "swing" about a second pivot shaft 15, said second pivot shaft 15 being mounted horizontally and transversely to the longitudinal direction of the vehicle.

Arranged between the seat frame 9 and the steering wheel frame 13 is a connecting bar 16 to move the steering wheel frame simultaneously with the seat frame to adjust the position of the steering wheel. The connecting bar 18 is pivotally connected at its lower end to the seat frame 9 by a third joint 17, which is disposed at a distance from the first joint 10, and at its upper end pivotally connected to the steering wheel frame 13 by a fourth joint 18, which is disposed at a distance from the second joint 14. The first joint 10, second joint 14, third joint 17 and fourth joint 18 form the pivots of a four-bar linkage mechanism. The four-bar linkage mechanism thus consists of the fixed part of the wall 3 between pivots 10 and 14, a first lever consisting of the part of the seat frame 9 between pivots 10 and 17, the connecting bar 16 and a second lever consisting of the part of the steering wheel frame 13 between pivots 14 and 18. The distances between the pivots 10, 14, 17, 18 are so chosen that the distance of the steering wheel 8 relative to the seat 4 remains favorable in respect of driving ergonomics when the seat frame 9 is moved between the low position I shown in Fig. 2 and the high position II shown in Fig. 3 and 4.

The vehicle additionally comprises a pedal support 20, on which the foot pedals 19 are mounted. To the left of the foot pedals 19 is a foot rest 21, upon which the driver can rest his left foot. Both the pedal support 20 and the foot rest 21 are mounted on the seat frame 9 so as to be turnable with it, their position relative to the driver thus remaining the same regardless of the seat height adjustment. The pedal assembly can also be adjusted in the longitudinal direction.

The steering wheel 8 is tiltably mounted in the steering wheel frame 13 so as to allow the driver to adjust the steering wheel to a suitable distance by adjusting its tilt angle. The vertical position of the steering wheel can also be adjusted by moving the steering wheel in the direction of its axis of rotation.

In the low position I, the driver has a comfortable driving position resembling the driving position in a car.

In Fig. 3 and 4, the seat frame 9 has been lifted by the power means 12 to the high position II. In the high position, the driver has a more upright driving position than in the low position I, resembling the driving position in a truck. In the high position, the seat 4 is in a raised position such that the eyes of the driver sitting on the seat are above the edge of the opening 5 so that the driver can see out of the vehicle over the terrain in front of it as well as in lateral directions. To permit this, the hatch 6 has been turned into a partially opened position. To protect the driver against environmental conditions, a windshield 7" is provided in the gap between the opened hatch 6 and the vehicle body.

Fig. 3 shows further that the power means 12 is pivotally connected at its forward end to the seat frame 9. The rearward end of the power means is pivotally connected to the shorter first arm 25 of a bell-crank lever 24. The bell-crank lever 24 is pivotally connected to a fixed bracket 26, which is secured by means of a transverse bar 27 to the side walls of the vehicle body. The end of the longer second arm 28 of the bell-crank lever 24 supports the seat frame 9 so that it can move in the direction of the seat frame to raise and lower the seat frame when the power means 12 is turning the bell-crank lever 24 about its pivot.

Fig. 4 presents yet another operating situation where the seat 4 and steering wheel 8 are in the high position II, the hatch 6 is fully open and the opening 5 permits passage of a person through the opening into and out of the cabin space. To allow such passage without the seat 4 hindering it, the seat frame 9 is provided with an arrangement of guide bars 22, along which the position of the seat 4 relative to the steering wheel 8 can be adjusted to allow the seat to be locked in different positions by means of a quick-release locking device. In addition, the seat part of the seat 4 can be given a U-shaped form to increase the area of the entry step surface. In Fig. 4, the seat 4 has been moved through about 0.5 m to a rear position, thus allowing a person to step on the entry step surface 23, said entry step surface 23 being placed upon the seat frame 9 in front of the seat 4 between the steering wheel 8 and the seat 4.

The seat may further be provided with other conventional adjustments, such as backrest reclining adjustment, seat part inclination adjustment, adjustable lumbar support, head support height adjustment and similar adjustments known in themselves. In addition to these, the backrest of the seat may be pivotally mounted at one edge to allow it to turn about a vertical axis in relation to the seat part, e.g. through about 90°, thus permitting easier passage from the seat area into the rear part of the cabin space.

The invention is not limited to the embodiment examples described above; instead, many variations are possible within the scope of the inventive concept defined in the claims.

## Claims

1. Vehicle, comprising
- a body (1) ;
- a cabin space (2) contained within the body and delimited by a wall (3) in a direction upward and/or forward;
- a driver's seat (3) placed in the cabin space;
- an opening (5) provided in the wall above the seat and aligned with the seat;
- an openable and closeable hatch (6) for the opening, said hatch being provided with viewing means (7', 7") allowing the driver to see outside;
- a steering wheel (8) placed forward of the seat;
- a seat frame (9) pivotally connected at one end to the wall (3) by a first joint (10) so as to be turnable about a horizontal first pivot shaft (11) transverse relative to the vehicle between a low position (I) and a high position (II), the seat (4) being mounted on the other end of said seat frame, so that in the high position the seat is closer to the opening (5) than in the low position; and
- an actuator (12) for turning the seat frame about the first pivot shaft (11) to adjust the height position of the seat, **characterized in that** the vehicle comprises
- a steering wheel frame (13), which is supported at one end on the wall (3) by a second joint (13) at a distance from the first joint so that it can turn about a second pivot shaft (15) parallel to the first pivot shaft, the steering wheel (8) being mounted at the other end of said steering wheel frame; and
- a connecting bar (16) fitted between the seat frame (9) and the steering wheel frame (13) to cause the steering wheel frame to move simultaneously with the seat frame to adjust the position of the steering wheel.

2. Vehicle according to claim 1, **characterized in that** one end of the connecting bar (16) is pivotally connected to the seat frame (9) by a third joint (17) placed at a distance from the first joint (10) while its second end is pivotally connected to the steering wheel frame (13) by a fourth joint (14) placed at a distance from the second joint (14) so that the first joint (10), second joint (14), third joint (17) and fourth joint (18) form the pivots of a four-bar linkage mechanism.

3. Vehicle according to claim 2, **characterized in that** the leverages of the four-bar linkage mechanism formed by the joints (10, 14, 17, 18) have been so fitted that the distance of the steering wheel (8) relative to the seat (4) remains favorable in respect of driving ergonomics when the seat frame (9) is moved between the low position (I) and the high position (II).

4. Vehicle according to any one of claims 1 - 3, **characterized in that** the vehicle comprises foot pedals (19) and a pedal support (20) on which the pedals are mounted, said pedal support being mounted on the seat frame (9) so as to be turnable together with the seat frame.

5. Vehicle according to any one of claims 1 - 4, **characterized in that** the vehicle comprises a footrest (21) to allow the driver to rest his left foot on it, said footrest being mounted on the seat frame (9) so as to be turnable together with the seat frame.

6. Vehicle according to any one of claims 1 - 5, **characterized in that** the steering wheel (8) is tiltably mounted in the steering wheel frame (13) so that the angle of tilt of the steering wheel can be adjusted.

7. Vehicle according to any one of claims 1 - 6, **characterized in that** the steering wheel is so mounted in the steering wheel frame (13) that the position of the steering wheel can be adjusted in the direction of its axis of rotation.

8. Vehicle according to any one of claims 1 - 7, **characterized in that** the seat frame (9) comprises a guide bar arrangement (22) longitudinal relative to the vehicle to allow the position of the seat (4) relative to the steering wheel (8) to be adjusted along said guide bars.

9. Vehicle according to any one of claims 1 - 8, **characterized in that** the seat frame (9) comprises an entry step surface (23) placed on the seat frame between the steering wheel and the seat (4) to facilitate passage through the opening (5) into the cabin space (2).

10. Vehicle according to any one of claims 1 - 9, **characterized in that** the actuator (12) is an extendable/retractable-type power means, which is arranged below the seat frame (9) to exert a force between the vehicle body (1) and the seat frame.

11. Vehicle according to any one of claims 1 - 10, **characterized in that** the vehicle is an armored military vehicle.

## Patentansprüche

1. Fahrzeug, enthaltend:
einen Körper (1);
einen Kabinenraum (2), der in dem Körper enthalten ist und von einer Wand (3) in einer Richtung nach oben und/oder nach vorn begrenzt ist;
einen Fahrersitz (3), der in dem Kabinenraum angeordnet ist;
eine Öffnung (5), die in der Wand oberhalb des Sitzes vorgesehen und auf den Sitz ausgerichtet ist;
einen öffen- und schließbaren Deckel (6) für die Öffnung, der mit Sichteinrichtungen (7',7") versehen ist, die es dem Fahrer erlauben, nach außen zu sehen;
ein Lenkrad (8), das vor dem Sitz angeordnet ist;
einen Sitzrahmen (9), der schwenkbar an einem Ende mit der Wand (3) durch eine erste Verbindung (10) so verbunden ist, dass er um eine horizontale erste Schwenkwelle (11) quer zum Fahrzeug zwischen einer tiefen Stellung (I) und einer hohen Stellung (II) verdreht werden kann, wobei der Sitz (4) an dem äußeren Ende des Sitzrahmens angebracht ist, so dass in der hohen Stellung der Sitz dichter an der Öffnung (5) ist, als in der tiefen Stellung; und
ein Betätigungsglied (12) zum Drehen des Sitzrahmens um die erste Schwenkwelle (11), um die Höhenposition des Sitzes einzustellen, **dadurch gekennzeichnet, dass** das Fahrzeug enthält:
einen Lenkradrahmen (13), der am einen Ende an der Wand (3) durch eine zweite Verbindung (13) in Distanz von der ersten Verbindung so abgestützt ist, dass er um eine zweite Schwenkwelle (15) parallel zur ersten Schwenkwelle drehen kann, wobei das Lenkrad (8) am anderen Ende des Lenkradrahmens angebracht ist; und
eine Verbindungsstange (16), die zwischen dem Sitzrahmen (9) und dem Lenkradrahmen (13) eingebaut ist, um den Lenkradrahmen zu veranlassen, sich simultan mit dem Sitzrahmen zu bewegen, um die Position des Lenkrades einzustellen.

2. Fahrzeug nach Anspruch 1, **dadurch gekennzeichnet, dass** ein Ende der Verbindungsstange (16) schwenkbar mit dem Sitzrahmen (9) durch eine dritte Verbindung (17) verbunden ist, die in einem Abstand zur ersten Verbindung (10) angebracht ist, während ihr zweites Ende schwenkbar mit dem Lenkradrahmen (13) durch eine vierte Verbindung (14) verbunden ist, die in einem Abstand von der zweiten Verbindung (14) gelegen ist, so dass die erste Verbindung (10), die zweite Verbindung (14), die dritte Verbindung (17) und die vierte Verbindung (18) die Schwenklager eines Vier-Stab-Gelenkmechanismus bilden.

3. Fahrzeug nach Anspruch 2, **dadurch gekennzeichnet, dass** die Hebelübersetzungen des Vier-Stab-Gelenkmechanismus, der von den vier Verbindungen (10,14,17,18) gebildet ist, so eingestellt worden sind, dass der Abstand des Lenkrades (8) zum Sitzen (4) vorteilhaft bezüglich der Fahrergonomik bleibt, wenn der Sitzrahmen (9) zwischen der tiefen Stellung (I) und der hohen Stellung (II) bewegt wird.

4. Fahrzeug nach einem der Ansprüche 1 bis 3, **dadurch gekennzeichnet, dass** das Fahrzeug Fußpedale (19) und eine Pedalstütze (20) umfasst, auf der die Pedale montiert sind, wobei die Pedalstütze an dem Sitzrahmen (9) montiert sind, so dass sie mit zusammen mit dem Sitzrahmen drehbar ist.

5. Fahrzeug nach einem der Ansprüche 1 bis 4, **dadurch gekennzeichnet, dass** das Fahrzeug eine Fußrast (21) aufweist, um es dem Fahrer zu ermöglichen, seinen linken Fuß darauf abzustellen, wobei die Fußrast an dem Sitzrahmen (9) angebracht ist, um zusammen mit dem Sitzrahmen drehbar zu sein.

6. Fahrzeug nach einem der Ansprüche 1 bis 5, **dadurch gekennzeichnet, dass** das Lenkrad (8) in dem Lenkradrahmen (13) neigungsverstellbar montiert ist, so dass der Neigungswinkel des Lenkrades eingestellt werden kann.

7. Fahrzeug nach einem der Ansprüche 1 bis 6, **dadurch gekennzeichnet, dass** das Lenkrad in dem Lenkradrahmen (13) so montiert ist, dass die Position des Lenkrades in Richtung seiner Drehachse eingestellt werden kann.

8. Fahrzeug nach einem der Ansprüche 1 bis 7, **dadurch gekennzeichnet, dass** der Sitzrahmen (9) eine Führungsstangenanordnung (22) in Längsrichtung des Fahrzeugs umfasst, um zu ermöglichen, die Position des Sitzes (4) gegenüber dem Lenkrad (1) längs dieser Führungsstangen einzustellen.

9. Fahrzeug nach einem der Ansprüche 1 bis 8, **dadurch gekennzeichnet, dass** der Sitzrahmen (9) eine Eintrittsstufenfläche (23) aufweist, die auf dem Sitzrahmen zwischen dem Lenkrad und dem Sitz (4) angeordnet ist, um den Durchgang durch die Öffnung (5) in den Kabinenraum (2) zu erleichtern.

10. Fahrzeug nach einem der Ansprüche 1 bis 9, **dadurch gekennzeichnet, dass** das Betätigungsglied (12) eine ausfahrbare/einziehbare Kraftantriebseinrichtung umfasst, die unter dem Sitzrahmen (9) angeordnet ist, um eine Kraft zwischen dem Fahrzeugkörper (1) und dem Sitzrahmen aufzubringen.

11. Fahrzeug nach einem der Ansprüche 1 bis 10, **dadurch gekennzeichnet, dass** das Fahrzeug ein bewaffnetes Militärfahrzeug ist.

## Revendications

1. Véhicule, comprenant :
- une carrosserie (1);
- un espace de cabine (2) contenu dans la carrosserie et délimité par une cloison (3) dans une direction allant vers le haut et/ou l'avant ;
- un siège de conducteur (3) positionné dans l'espace de la cabine ;
- une ouverture (5) disposée dans la cloison au-dessus du siège et alignée avec le siège ;
- une écoutille qui peut être ouverte et fermée (6) pour l'ouverture, ladite écoutille étant dotée de moyens de visualisation (7', 7") qui permettent au conducteur de voir à l'extérieur;
- un volant (8) positionné à l'avant du siège;
- une structure de siège (9) raccordée de façon pivotante à une extrémité de la cloison (3) par une première articulation (10) de façon à être rotative autour d'un premier axe de pivot horizontal (11) transversal par rapport au véhicule entre une position basse (I) et une position haute (II), le siège (4) étant monté sur l'autre extrémité de ladite structure de siège, de telle sorte que dans la position haute le siège soit plus proche de l'ouverture (5) que dans la position basse ; et
- un actionneur (12) destiné à faire tourner la structure du siège autour du premier axe de pivot (11) de façon à ajuster la position en hauteur du siège, **caractérisé en ce que** le véhicule comprend
- un montant de volant (13) qui est supporté à une extrémité sur la cloison (3) par une seconde articulation (13) à distance de la première articulation de sorte qu'elle puisse tourner autour d'un second axe de pivot (15) parallèle au premier axe de pivot, ledit volant (8) étant monté à l'autre extrémité dudit montant de volant ; et
- une tringle de connexion (16) montée entre la structure du siège (9) et la structure du volant (13) pour entraîner le déplacement de la structure du volant simultanément avec la structure du siège pour ajuster la position du volant.

2. Véhicule selon la revendication 1, **caractérisé en ce qu'**une extrémité de la tringle de connexion (16) est raccordée de façon pivotante à la structure du siège (9) par une troisième articulation (17) placée à distance de la première articulation (10) alors que sa seconde extrémité est raccordée de façon pivotante à la structure du volant (13) par une quatrième articulation (14) placée à distance de la seconde articulation (14) de telle sorte que la première articulation (10), la seconde articulation (14), la troisième articulation (17) et la quatrième articulation (18) forment les articulations d'un mécanisme de liaison à quatre tringles.

3. Véhicule selon la revendication 2, **caractérisé en ce que** les leviers du mécanisme de liaison à quatre tringles formés par les articulations (10, 14, 17, 18) ont été montés de telle sorte que la distance du volant (8) par rapport au siège (4) reste favorable par rapport à l'ergonomie de conduite quand la structure du siège (9) est déplacée entre la position basse (I) et la position haute (II).

4. Véhicule selon l'une quelconque des revendications 1 à 3, **caractérisé en ce que** le véhicule comprend des pédales (19) et un support de pédale (20) sur lequel les pédales sont montées, ledit support de pédale étant monté sur la structure du siège (9) de façon à pouvoir pivoter avec la structure du siège.

5. Véhicule selon l'une quelconque des revendications 1 à 4, **caractérisé en ce que** le véhicule comprend un repose pied (21) destiné à permettre au conducteur de reposer son pied gauche sur celui-ci, ledit repose-pied étant monté sur la structure de siège (9) de façon à pouvoir tourner avec la structure de siège.

6. Véhicule selon l'une quelconque des revendications 1 à 5, **caractérisé en ce que** le volant (8) est monté de façon basculante dans la structure du volant (13) de telle sorte que l'angle de basculement du volant puisse être ajusté.

7. Véhicule selon l'une quelconque des revendications 1 à 6, **caractérisé en ce que** le volant est monté dans la structure du volant (13) de telle sorte que la position du volant puisse être ajustée dans la direction de son axe de rotation.

8. Véhicule selon l'une quelconque des revendications 1 à 7, **caractérisé en ce que** la structure du siège (9) comprend un agencement de rail de guidage (22) longitudinal par rapport au véhicule pour permettre d'ajuster la position du siège (4) par rapport au volant (8) le long desdits rails de guidage.

9. Véhicule selon l'une quelconque des revendications 1 à 8, **caractérisé en ce que** la structure du siège (9) comprend une surface de marche d'accès (23) placée sur la structure du siège entre le volant et le siège (4) pour faciliter le passage au travers de l'ouverture (5) dans l'espace de la cabine (2).

10. Véhicule selon l'une quelconque des revendications 1 à 9, **caractérisé en ce que** l'actionneur (12) est un moyen électrique de type extensible et rétractable, qui est agencé en dessous de la structure du siège (9) pour exercer une force entre la carrosserie du véhicule (1) et la structure du siège.

11. Véhicule selon l'une quelconque des revendications 1 à 10, **caractérisé en ce que** le véhicule est un véhicule militaire blindé.
